# EUROPÄISCHE PATENTSCHRIFT

(11) **EP 1 262 759 B1**
(45) Veröffentlichungstag und Bekanntmachung des Hinweises auf die Patenterteilung: **09.03.2011**
(21) Anmeldenummer: 02011729.7
(22) Anmeldetag: 27.05.2002
(51) Int. Cl.: G01N 1/34, B01L 3/00, B01L 3/02

(54) **Mikroplatte zum Bearbeiten von Proben**
Microplate for processing samples
Microplaque de traitement d'échantillons

(30) Priorität: 29.05.2001 CH 9902001
(43) Veröffentlichungstag der Anmeldung: 04.12.2002
(73) Patentinhaber: Tecan Trading AG, 8708 Männedorf (CH); Merck Patent GmbH, 64293 Darmstadt (DE)
(72) Erfinder: Ingenhoven, Nikolaus, 8713 Uerikon (CH); Lubda, Dieter, 64625 Bensheim (DE)
(74) Vertreter: Heusch, Christian

(56) Entgegenhaltungen:
- EP-A- 1 033 169
- WO-A-94/20831
- WO-A-97/26540
- WO-A-98/37949
- US-A- 5 603 899
- US-A- 5 918 273
- "ZipTips Pipette Tips" MILLIPORE CATALOGUE, [Online] XP002192545 Gefunden im Internet: <URL:http://www.millipore.com/catalogue.ns f/docs/C5737> [gefunden am 2002-03-08]

## Beschreibung

Die Erfindung betrifft eine Mikroplatte zum Bearbeiten von Proben, insbesondere zur Festphasenextraktion, Elution und Applikation von Zielmolekülen.

In Labors, die sich mit molekularbiologischen/biochemischen Untersuchungen beschäftigen, sind die Bereiche "Genomics" oder "Proteomics" gebräuchliche Begriffe für die Bearbeitung und Untersuchung von Erbsubstanzen, wie DNA (Desoxyribonukleinsäure), RNA (Ribonukleinsäure) bzw. deren Teile in Form von Oligonukleotiden oder von Proteinen (Eiweissen, z.B. in Form von Antigenen oder Antikörpern bzw. deren Teile in Form von Polypeptiden) umfassen. Solche und ähnliche Prozesse können eine Vielzahl von Arbeitsschritten in verschiedenen Arbeitsstationen umfassen. Gerade der Bereich Proteomics gewinnt zunehmend an Bedeutung, weil nicht nur das Genom (Erbmasse) sondern vor allem die jeweils vorhandene Proteinausstattung (Proteom) das Aussehen und den Zustand eines biologischen Organismus bestimmen. Diese Erkenntnis führte dazu, dass heute an Stelle des Dogmas "ein Gen - ein Protein - eine Funktion" ein tieferes Verständnis der Proteine als eigentliche Regulationsnetzwerke zu treten hat. Proteomics - die quantitative Analyse der zu einem bestimmten Zeitpunkt und unter bestimmten Bedingungen in einem Organismus vorhandenen Proteine - wird sich deshalb als ein wichtiger Schlüssel zur Funktionsanalyse sowohl in der Grundlagenforschung (z.B. bei der Aufklärung von Reaktions- und Regulationsnetzwerken) als auch bei der angewandten Forschung (z.B. bei der Suche und Auswahl von Targets zur Entwicklung von Medikamenten) profilieren.

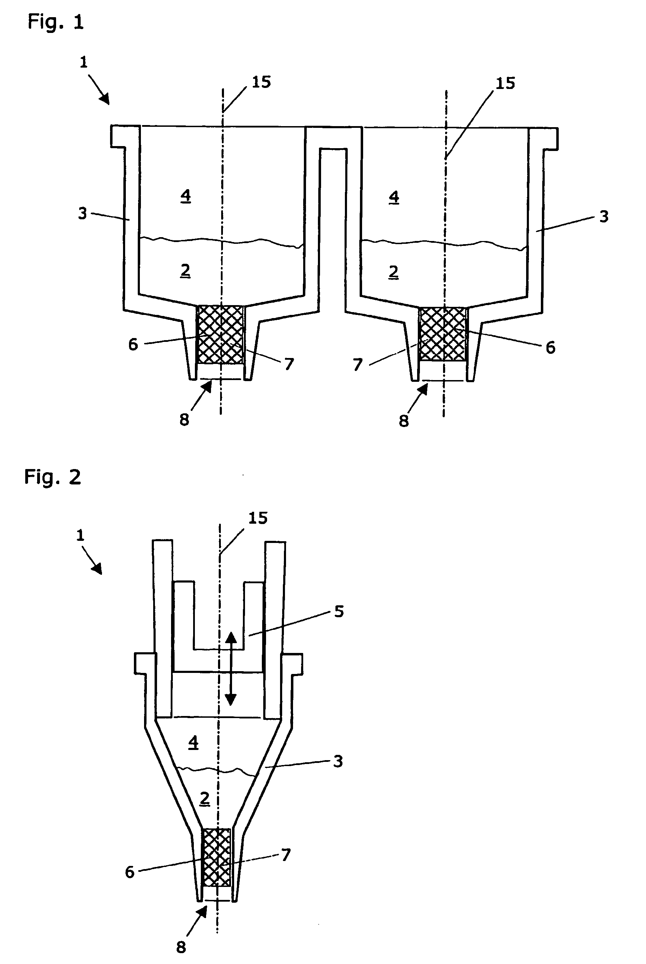

Systeme, welche in der Lage sind, automatisierte Trenn- bzw. Separierungsoder Reinigungsverfahren durchzuführen, verwenden typischerweise sogenannte "SPE-Platten" (Solid Phase Extraction Plates) zum Bearbeiten von Proben, insbesondere zur Festphasenextraktion. Das Prinzip der Festphasenextraktion kann folgendermassen zusammengefasst werden: Eine Probe wird auf ein festes Sorbens aufgetragen. Das Sorbens adsorbiert oder bindet bestimmte Bestandteile der Probe. Diese Bestandteile werden oft Zielmoleküle genannt, jedoch kann es sich bei solchen Bestandteilen nicht nur um nicht-ionische, sondern auch um ionische oder auch um partikuläre Bestandteile wie Zellen, Zellfragmente, wie Mitochondrien oder Zellkerne, oder auch um Viren handeln. Im folgenden werden deswegen unter dem Begriff "Teilchen" zusammenfassend alle im vorgehenden erwähnten Bestandteile und Zielmoleküle umfasst. Durch die Festphasenextraktion werden nach dem Adsorptionsschritt die übrigen Probenbestandteile von dem mit Zielmolekülen beladenen Sorbens abgetrennt. Anschliessend wird üblicherweise das Sorbens gewaschen. Schliesslich werden die Zielmoleküle (d.h. die Teilchen) von dem festen Sorbens eluiert. Das Eluat enthält eine gereinigte oder konzentrierte Fraktion der Zielmoleküle (d.h. der Teilchen). Dabei wird - je nach dem Anwendungsziel - ein Sorbens, d.h. ein spezifisch aktivierter Filter oder ein entsprechendes Gitter in oder zumindest nahe der Bodenauslassöffnung eines Töpfchens oder "Well" einer Mikroplatte platziert (vgl. Fig. 1). Zur Durchführung eines Trennverfahrens wird eine Probe in ein Well pipettiert und gezwungen, die Mikroplatte durch das Sorbens, d.h. den Filter bzw. das Gitter über die Bodenauslassöffnung zu verlassen. Typischerweise geschieht dies durch Anwendung von Saugkräften (durch Anlegen von Vakuum), oder durch Anlegen von Überdruck oder Schwerkraft (z.B. durch Zentrifugation).

Im Verlauf dieses Verfahrens binden somit die Zielmoleküle an das aktivierte Material, d.h. das Sorbens, oder werden an das Sorbens adsorbiert. Nach dem Ausführen einiger Waschschritte können die Zielmoleküle bzw. die so von der Probe abgetrennten organischen bzw. anorganischen Teilchen mit Hilfe eines Eluents (einem geeigneten Lösungsmittel) eluiert, d.h. vom Filter bzw. vom Gitter getrennt werden. Anschliessend werden die eluierten Teilchen wie oben beschrieben, zum Beispiel mittels Vakuum oder Zentrifugation, in eine zweite Mikroplatte oder auf die Oberfläche eines Trägers übertragen.

Üblicherweise umfassen die bei der Festphasenextraktion als Packung verwendeten Sorbenzien ein Basismaterial, das möglichst keine unspezifische Bindung von Probenbestandteilen verursachen sollte, und Bindungsgruppen auf dem Basismaterial. Diese Bindungsgruppen binden spezifisch die Teilchen, z.B. die Zielmoleküle. Ausnahmsweise gibt es Basismaterialien, die bereits als solche, d.h. ohne dass zusätzliche Bindungsgruppen notwendig wären, bestimmte Zielmoleküle reversibel zu binden vermögen, z.B. bindet Silicagel (SiO₂) Nukleinsäuren reversibel. Basismaterialien können in partikulärer Form porös oder unporös, oder als poröse Formkörper vorliegen und können aus organischen oder anorganischen Substanzen bestehen. Beispiele organischer Polymere sind Copolymerisate aus Styrol-Divinylbenzol oder hydrophile Polymere auf Grundlage von Poly-(meth)-Acrylaten, oder auch Polyamide. Poröse Membranen, fadenförmige Materialien, z.B. Gewebe oder Filze, können ebenfalls als organische Basismaterialien verwendet werden. Typische anorganische Basismaterialien sind Metalloxide, insbesondere SiO₂ oder Al₂O₃. Die Bindungsgruppen können unmittelbar in das Basismaterial eingeführt werden, z.B. durch Sulfonierung von Copolymerisaten aus Styrol-Divinylbenzol. Bindungsgruppen können auch durch Einpolymerisieren von geeigneten Monomeren in das Basismaterial erhalten werden. Anorganische Basismaterialien können mit Hilfe von organisch substituierten Silanen, die beispielsweise ionische Gruppen enthalten, derivatisiert werden. Für die Festphasenextraktion geeignete Sorbenzien sind kommerziell erhältlich und in der Literatur beschrieben.

Die eingesetzten Filter bzw. Gitter bei bekannten SPE-Platten weisen oft einen unterschiedlichen Flusswiderstand auf, so dass - falls Vakuum zum Leeren der SPE-Platten verwendet wird - einige Wells schneller als andere geleert werden. Das Leeren aller Wells kann dann nur durch plötzliches Anlegen von grossem Unterdruck erreicht werden. Dies führt aber oft zu spritzendem oder gar schäumendem Eluat, was zu unerwünschten Materialübertragungen in benachbarte Wells oder zu einem Verlust der Probe führen kann.

Aus US 5,918,273 ist eine vielseitig verwendbare, aber etwas kompliziert aufgebaute Minisäule zur Festphasenextraktionen von Proben bekannt, die in einer speziellen Form hergestellt und so fertig in die Böden von Probengefässen bzw. in die Leitung eines Analysesystems eingesetzt bzw. integriert werden kann.

WO 98/37 949 offenbart eine Pipettenspitze bzw. eine Mikroplatte, die als Sorbens ein In situ eingegossenes Compositmaterial enthält, das aus einer Anzahl von sorptionsfähigen Partikeln besteht, die ihrerseits in einer porösen Polymermatrix eingegossen sind.

Ebenfalls bekannt sind sogenannte "ZipTips™", welche von der Firma Millipore (Millipore Corporation, 80 Ashby Road, Bedford, Massachusetts 01730-2271, U.S.A.) vertrieben werden (vgl. Fig. 2). Solche "Wegwerfspitzen" werden auf eine Pipette gesteckt und weisen einen grossen Innenraum von ca. 10-20 µl auf. Falls die Tips nicht vollständig mit Flüssigkeit gefüllt werden, bleibt zwischen der Flüssigkeitsoberfläche und dem Kolben der Pipette ein Luftpolster bestehen. Dieses Luftpolster wirkt wie ein Dämpfungselement beim Aspirieren (Aufnehmen) und Dispensieren (Abgeben) von Flüssigkeit. Dadurch erfordert das Bestimmen des Endpunktes des Aufnehmens oder Abgebens von Flüssigkeiten - speziell wenn nur kleine Volumina pipettiert werden sollen - grosse Geschicklichkeit und Mühe, falls es überhaupt reproduziert werden kann.

Um Sorbenzien für die Festphasenextraktion zu verbessern sind folgende Gesichtspunkte wesentlich:
- geringe unspezifische Bindung von Probenbestandteilen an das Basismaterial;
- hohe Bindungskapazität einschliesslich dynamischer Bindungskapazität (letztere bezieht sich auf die häufig beobachtete Verringerung der Bindungskapazität bei erhöhter linearer Flussrate);
- geringer hydrodynamischer Widerstand, damit bei höheren linearen Flussraten nur geringer Gegendruck entsteht;
- insbesondere bei Mikroplatten darf der hydrodynamische Widerstand zwischen den einzelnen Wells nur geringfügig variieren.

Die Aufgabe der Erfindung besteht darin, eine alternative Vorrichtung vorzuschlagen, welche es erlaubt, die Nachteile der als Stand der Technik beschriebenen Vorrichtungen zumindest teilweise zu beheben.

Diese Aufgabe wird gelöst, indem eine Mikroplatte zum Bearbeiten von Proben vorgeschlagen wird, die eine Vielzahl von Wells mit je einem Sammelraum umfasst, welcher optional mit einer auf diesen Sammelraum wirkenden Pumpe zum Aspirieren bzw. Dispensieren von Flüssigkeiten verbindbar ist. Die Mikroplatte umfasst weiterhin einen an den Sammelraum anschliessenden Trennraum zur Festphasenextraktion und Elution von aus diesen Proben abgetrennten organischen bzw. anorganischen Teilchen und eine Öffnung zum Abgeben dieser Teilchen. Die erfindungsgemässe Mikroplatte ist dadurch gekennzeichnet, dass jedes ihrer Wells eine mit dem Sammelraum verbundene Kapillare umfasst, welche eine monolithische Packung zur Festphasenextraktion von aus diesen Proben abgetrennten organischen bzw. anorganischen Teilchen aufweist und als Trennraum dient. Diese Kapillare wurde dabei in einer gewünschten Länge von einer Endloskapillare abgetrennt, weist einen bestimmten Durchmesser auf, umfasst eine Wand und stellt die Öffnung bereit. Zusätzliche erfindungsgemässe Merkmale ergeben sich aus den abhängigen Ansprüchen.

Die Kapillaren, die erfindungsgemäss verwendet werden, enthalten ein Sorbens das die Teilchen (z.B. Zielmoleküle) reversibel bindet. Beispiele von Zielmolekülen und jeweils anwendbaren Bindungsgruppen sind:
- Nukleinsäuren (RNA, DNA): Silicagel als Sorbens, oder Sorbenzien, die Bindungsgruppen wie kationischen Gruppen (Anionenaustauscher) oder Affinitätsliganden (Oligonucleotide oder deren Analoga wie (Hetero)aromatische Polyamide) enthalten.
- Proteine: Ionische Gruppen (Anionen- oder Kationenaustauscher); Materialien mit hydrophoben Wechselwirkungen (hydrophobic interaction) oder Umkehrphasenmaterialien (RP-Materialien); Affinitätsliganden wie Antikörper oder Antikörperfragmente, Metallchelate, Farbstoffe oder Substratanaloga.
- Niedermolekulare Verbindungen wie Pharmaka oder deren Metabolite: Sorbenzien mit eingeschränkter Zugänglichkeit der Bindungsgruppen (restricted access materials).

Derartige Sorbenzien sind dem Fachmann grundsätzlich bekannt. Einzelheiten betreffend Ionenaustauscher sind beispielsweise in EP 0 337 144, EP 0 686 258, EP 0 722 360, und in EP 0 804 494 offenbart. Sorbenzien mit Affinitätsliganden und typische Affinitätsliganden sind in EP 0 565 978, solche für hydrophobe Wechselwirkungen in EP 0 708 919, und solche mit eingeschränkter Zugänglichkeit in EP 0 537 461 offenbart.

Bei Verwendung von partikulären Sorbenzien sind Verschlusseinrichtungen vorzusehen, die für den Flüssigkeitsstrom durchlässig sind, aber das Sorbens zurückhalten; Beispiele für solche Einrichtungen sind Einschnürungen der Kapillare oder poröse Pfropfen. Letztere sind in WO 01/57 516 offenbart. Partikuläre Sorbenzien können auch zusammengesintert oder zusammengeklebt werden, um sie in der Kapillare zu fixieren.

Monolithische Sorbenzien könne in den Kapillaren in situ hergestellt werden. Sie müssen Makroporen enthalten, damit ein Flüssigkeitsstrom durch die Kapillare ermöglicht wird. Ihre Oberfläche kann durch Mesoporen auf der Oberfläche des festen Materials vergrössert werden. Derartige Sorbenzien auf der Grundlage von Silicagel sind in WO 99/38 006 und WO 99/50 654 offenbart.

Die Abmessungen der erfindungsgemäss verwendeten Kapillaren sind zunächst von den Probenvolumina und der Geometrie der Wells abhängig. Üblicherweise beträgt die Länge der Kapillaren 0,5 mm bis 5 cm, ihr Innendurchmesser zwischen 1 und 500 µm. Ihr Aussendurchmesser ergibt sich aus Innendurchmesser und Wandstärke der verwendeten Kapillare.

Zu den Vorteilen der erfindungsgemässen Vorrichtung gegenüber dem Stand der Technik zählen:
- Das Bettvolumen (Packung) und die Bodenauslassöffnung (Durchmesser) der Vorrichtung können der chemisch-physikalischen Natur der zu extrahierenden, organischen bzw. anorganischen Teilchen individuell angepasst werden. Damit kann der Verlust der Zielmoleküle (durch Adsorption in zu grossen Bettvolumina) und das Auftreten von Totvolumen (wie das produktionsbedingt bei Vorrichtungen aus dem Stand der Technik zwischen Packung und Bodenauslassöffnung bedingt ist) verhindert werden.
- Es können grosse Stückzahlen von baugleichen Mikroplatten hergestellt werden, in denen lediglich die eingesetzten Kapillaren entsprechend der chemisch-physikalischen Natur und/oder dem Volumen der zu extrahierenden, organischen bzw. anorganischen Teilchen variieren.
- Die Probenreinigung (Peptid-Entsalzung und -Konzentration) für "MALDI TOF - MS", die "Matrix Assisted Laser Desorption Ionisation - Time of Flight Mass Spectrometry" wird herkömmlicherweise mit "ZipTips™" von Millipore durchgeführt. Wegen des hohen Einzelpreises, Bettvolumens und Flusswiderstandes, aber auch wegen der limitierenden Einzelkanal-Bedienung ist diese bekannte Lösung unvorteilhaft und kann durch die vorgeschlagene erfindungsgemässe Vorrichtung ersetzt werden.
- Die erforderlichen Kapillaren, die entsprechend der vorliegenden Erfindung mit dem jeweiligen Sorbens gefüllt werden, sind seit vielen Jahren auf dem Markt erhältlich (z.B. durch Polymicro Technologies, 18019 N 25^{th} Avenue, Phoenix, AZ 85023-1200, U.S.A).
- Dank dem vorgeschlagenen Verfahren zur Herstellung der erfindungsgemässen Vorrichtung können diese Kapillaren nun zusammen mit einzelnen Pipettenspitzen oder mit Mikroplatten eingesetzt werden. Solche Mikroplatten sind auch als Mikrotiterplatten™ (Handelsmarke von Beckman Coulter Inc., 4300 N. Harbour Blvd., P.O. Box 3100, Fullerton, CA 92834, USA) bekannt und können z.B. 96, 384 oder 1536 Wells umfassen.
- Ein reproduzierbares, minimales Eluiervolumen von ca. 0.5 µl ermöglicht - vorzugsweise bei gleichzeitiger Anordnung vieler paralleler Kanäle - eine weitestgehende Automatisation der Verfahren und eine Minimierung der Prozesszeiten.
- Die Abgabe (Dispensation) von kleinsten Mengen des Eluats erlaubt ein erfolgreiches Verhindern eines Verdünnungseffektes und damit den Verzicht auf kritische Konzentrationsverfahren, bei denen die Zielmoleküle (z.B. Proteine) oft koagulieren oder auch an den Behälterwänden adsorbieren und damit verloren gehen.
- Die Abgabe mit den Kapillaren kann z.B. direkt auf die Oberfläche eines MALDI TOF - MS -Targets ausgeführt werden, so dass kein Pipettierzwischenschritt für kleinste Proben (wie bei den SPE-Platten im Stand der Technik) mehr notwendig ist.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

Die folgenden schematischen Zeichnungen sollen den bekannten Stand der Technik dokumentieren. Bevorzugte Ausführungsformen der erfindungsgemässen Vorrichtung werden ebenfalls an Hand von solchen Zeichnungen erläutert, ohne dass dieselben den Umfang der Erfindung einschränken sollen. Dabei zeigen:
- Fig. 1: einen Vertikal-Teilschnitt durch eine SPE-Platte aus dem Stand der Technik;
- Fig. 2: einen Vertikalschnitt durch einen "ZipTip™" aus dem Stand der Technik;
- Fig. 3A: einen Vertikal-Teilschnitt durch eine erfindungsgemässe Vorrichtung gemäss einer ersten Ausführungsform;
- Fig. 3B: einen Horizontalschnitt durch den Sammelraum der erfindungsgemässen Vorrichtung gemäss einer ersten Ausführungsform, entsprechend der Schnittlinie A--A in Fig. 3A;
- Fig. 4: einen Vertikal-Teilschnitt durch eine erfindungsgemässe Vorrichtung gemäss einer zweiten Ausführungsform;
- Fig. 5: einen Vertikal-Teilschnitt durch eine erfindungsgemässe Vorrichtung gemäss einer dritten Ausführungsform;
- Fig. 6: einen Vertikal-Teilschnitt durch eine Einrichtung zum Herstellen der erfindungsgemässen Vorrichtung gemäss einer dritten Ausführungsform.

Figur 1 zeigt einen Vertikal-Teilschnitt durch eine SPE-Platte aus dem Stand der Technik. Bei dieser SPE-Platte handelt es sich somit um eine Vorrichtung 1 zum Bearbeiten von Proben 2, die einen Körper 3 mit einem Sammelraum 4 umfasst. Ferner umfasst die Vorrichtung 1 einen an den Sammelraum 4 anschliessenden Trennraum 6 zur Festphasenextraktion und Elution von aus diesen Proben 2 abgetrennten organischen bzw. anorganischen Teilchen 7 und eine Öffnung 8 zum Abgeben dieser Teilchen 7. Wie eingangs beschrieben, wird z.B. ein spezifisch aktivierter Filter, der den Trennraum 6 definiert, nahe der Bodenauslassöffnung 8 eines Töpfchens 4 oder "Well" 4 einer Mikroplatte platziert. Zur Durchführung eines Trennverfahrens wird eine Probe in ein Well 4 pipettiert und wie oben beschrieben, beispielsweise durch Anwendung von Saugkräften (durch Anlegen von Vakuum) oder Schwerkraft (durch Zentrifugation), gezwungen, die Mikroplatte durch den Filter 6 über die Bodenauslassöffnung 8 zu verlassen.

Im Verlauf dieses Verfahrens werden somit die Zielmoleküle an das Sorbens, d.h. das aktivierte Material, gebunden, beziehungsweise adsorbiert. Nach dem Ausführen einiger Waschschritte können die Zielmoleküle bzw. die so von der Probe abgetrennten organischen bzw. anorganischen Teilchen mit Hilfe eines Eluents (einem geeigneten Lösungsmittel) eluiert, d.h. vom Filter bzw. vom Gitter getrennt werden. Anschliessend werden die eluierten Teilchen mittels Vakuum oder Zentrifugation in eine zweite Mikroplatte oder auf die Oberfläche eines Trägers übertragen.

Der unterschiedliche Flusswiderstand der eingesetzten Filter 6 ist durch die unterschiedliche Höhe zwischen der Filterunterseite und der Öffnung 8 versinnbildlicht. Tatsächlich definiert diese Höhe (zusammen mit dem Innendurchmesser der Öffnung 8) ein an sich unerwünschtes Totvolumen, in welchem ein Rest des Eluats hängen bleiben und damit das Resultat verfälschen kann.

Figur 2 zeigt einen Vertikalschnitt durch einen "ZipTip™" aus dem Stand der Technik. Bei diesem ZipTip™ handelt es sich somit um eine Vorrichtung 1 zum Bearbeiten von Proben 2, die einen Körper 3 mit einem Sammelraum 4 umfasst. Dieser Sammelraum 4 ist mit einer auf diesen Sammelraum wirkenden Pumpe 5 (Bewegung durch Doppelpfeil symbolisiert) zum Aspirieren bzw. Dispensieren von Flüssigkeiten verbindbar. Diese Verbindung zur Pumpe wird durch Aufstecken des ZipTip™ auf eine Pipette erreicht, wobei der Kolben der Pipette die Pumpe 5 darstellt. Ferner umfasst die Vorrichtung 1 einen an den Sammelraum 4 anschliessenden Trennraum 6 zur Festphasenextraktion und Elution von aus diesen Proben 2 abgetrennten organischen bzw. anorganischen Teilchen 7 und eine Öffnung 8 zum Abgeben dieser Teilchen 7.

Wie eingangs beschrieben, wirkt ein Luftpolster im ZipTip™ wie ein Dämpfungselement beim Aspirieren (Aufnehmen) und Dispensieren (Abgeben) von Flüssigkeit. Zusätzliche Probleme können dadurch entstehen, dass die Dichtflächen zwischen dem ZipTip™ und der Pipette nicht perfekt abschliessen, so dass jede Reproduzierbarkeit der zu pipettierenden Volumina in Frage gestellt ist. Zudem kann jeder aufgesteckte ZipTip™ in eine von der eigentlichen Pipettenachse 15 abweichenden Richtung zeigen, so dass ein achsgenaues Bestücken einer Mehrfachpipette recht aufwändig und zeitraubend sein kann. Der eingesetzte Filter 6 ist durch die unterschiedliche Höhe zwischen der Filterunterseite und der Öffnung 8 versinnbildlicht. Auch solche ZipTips™ können unterschiedliche Flusswiderstände und unerwünschte Totvolumina aufweisen.

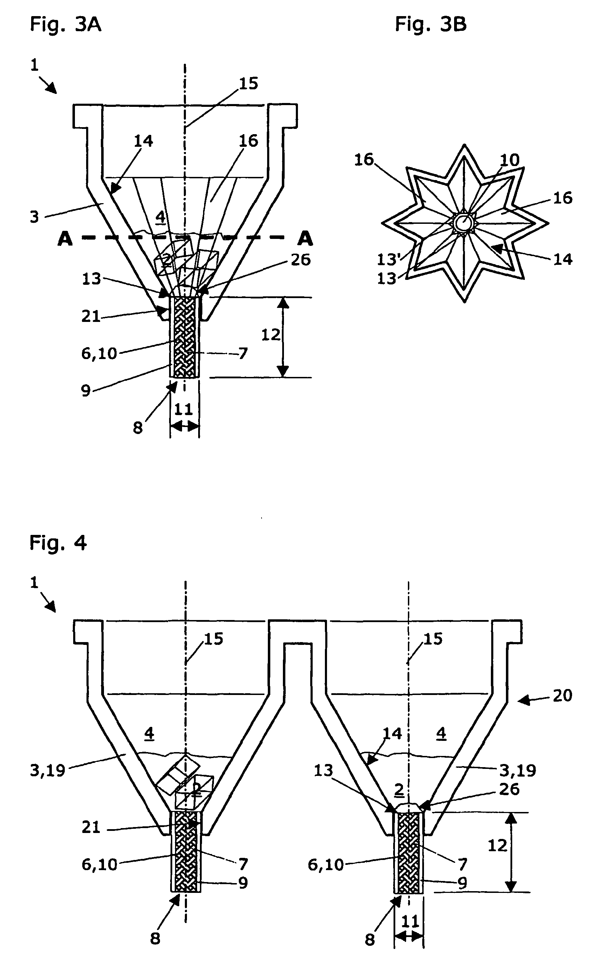

Figur 3 zeigt einen Vertikal-Teilschnitt durch eine erfindungsgemässe Vorrichtung gemäss einer ersten Ausführungsform in Form einer einzelnen Pipettenspitze. Es handelt sich hier um eine Vorrichtung 1 zum Bearbeiten von Proben 2, welche einen Körper 3 mit einem Sammelraum 4, der mit einer auf diesen Sammelraum wirkenden Pumpe 5 zum Aspirieren bzw. Dispensieren von Flüssigkeiten verbindbar ist, umfasst. Ferner umfasst die Vorrichtung 1 einen an den Sammelraum 4 anschliessenden Trennraum 6 zur Festphasenextraktion und Elution von aus diesen Proben 2 abgetrennten organischen bzw. anorganischen Teilchen 7 und eine Öffnung 8 zum Abgeben dieser Teilchen 7. Die Vorrichtung 1 ist dadurch gekennzeichnet, dass sie eine mit dem Sammelraum 4 bzw. mit dem Körper 3 verbundene Kapillare 9 umfasst, welche eine Packung 10 zur Festphasenextraktion von aus diesen Proben 2 abgetrennten organischen bzw. anorganischen Teilchen 7 aufweist und als Trennraum 6 dient.

In Figur 3A gut sichtbar, schliesst bei dieser Vorrichtung 1 die Packung 10 der Kapillare 9 unmittelbar an den Sammelraum 4 an und füllt die Kapillare 9 ganz aus. Diese Packung 10 kann einfach an die chemisch-physikalische Natur der zu extrahierenden, organischen bzw. anorganischen Teilchen 7 angepasst werden, indem gerade eine Kapillare mit den passenden Eigenschaften verwendet wird. Bei den durch die Firma Polymicro Technologies gelieferten Kapillaren sind die Aussendurchmesser (z.B. 150 µm; 363 µm) über einen weiten Bereich der Innendurchmesser (2 bis 75 µm; 5 bis 150 µm) gleich, so dass sich die Geometrie der Vorrichtung nicht ändern muss, obwohl ganz unterschiedliche Bettvolumina bzw. Packungstypen verwendet werden können. So kann eine Kapillare 9 immer den gleichen Aussendurchmesser 11 aufweisen; das Packungsvolumen kann dann über die Länge 12 und/oder den Innendurchmesser der Kapillare 9 bestimmt werden.

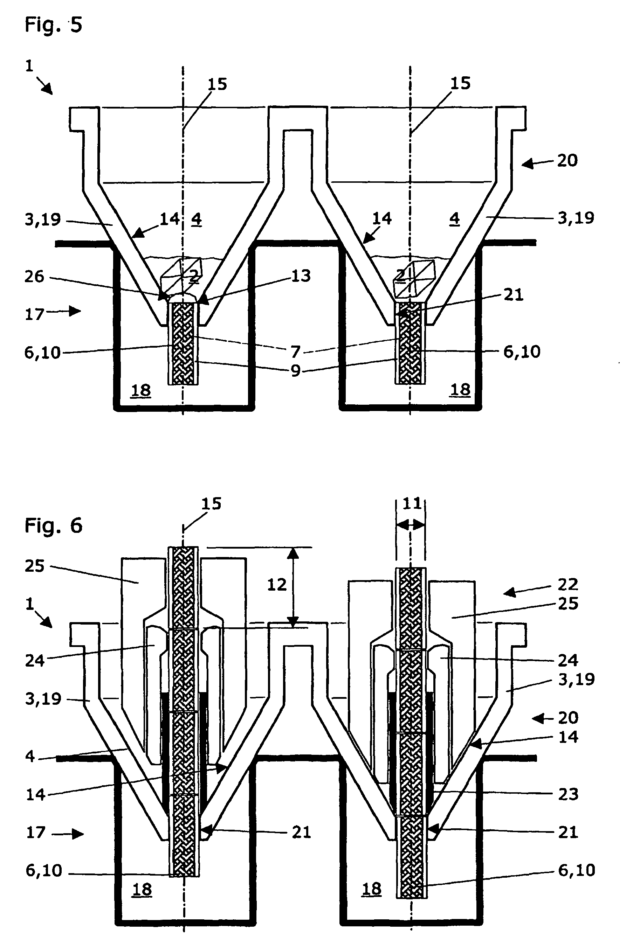

Vorzugsweise wird eine Kapillare 9 durch Einstecken in den Körper 3 oder durch Umspritzen mit dem Körper 3 mit dem Sammelraum 4 verbunden, wobei das Einstecken besonders bevorzugt ist (vgl. Fig. 6).

Z.B. zum Inkubieren von Gelwürfeln (beispielsweise aus einer 2-D Gelelektrophorese), Bio-Beads oder Filterpapierschnipseln (beispielsweise aus Chromatographieversuchen) und dergleichen zerkleinerten Trennvorrichtungen mit darin aufgetrennten organischen bzw. anorganischen Teilchen 7 umfasst zumindest ein Teil der Innenoberfläche 14 des Körpers 3 bzw. des Sammelraumes 4 vorzugsweise eine im Wesentlichen koaxial zu der Längsachse 15 des Körpers 3 verlaufende Reliefstruktur 16. Diese Reliefstruktur kann eine gezackte (vgl. Fig. 3B) oder gewellte Struktur (nicht gezeigt) aufweisen oder auch von diesen Formen abweichen; Hauptsache ist, die Innenoberfläche 14 des Körpers bzw. des Sammelraumes 4 weist Erhebungen und Vertiefungen auf, welche verhindern, dass Gelwürfel oder andere Probenteile nach Abschluss der Inkubation den Abfluss des Eluats blockieren.

Zumindest ein ringförmiger Bereich 13 der Kapillare 9 und/oder ein direkt an diese Kapillare anschliessender Bereich 13' der Innenoberfläche 14 des Körpers 3 können hydrophobisiert sein. Dies hat den Vorteil, dass wässerige Flüssigkeiten durch ihre Oberflächenspannung eine gekrümmte Oberfläche 25 aufweisen und so der Kapillare überschichtet werden können, ohne dass die Kapillare gefüllt wird. Dies ist insbesondere dann von Vorteil, wenn die Proben Filterpapierschnitzel, Gelwürfel und dergleichen Materialien mit darin aufgenommenen bzw. darin aufgetrennten organischen bzw. anorganischen Teilchen 7 umfassen und eine Inkubation dieser Proben in einem möglichst kleinen Volumen durchgeführt werden soll. Für diese aber auch für andere Anwendungen ist es von Vorteil, wenn der Körper 3 bzw. der Sammelraum 4 (wie gezeigt) eine V-Form aufweist, welche im Bereich ihrer engsten Stelle an die Kapillare 9 anschliesst.

Figur 4 zeigt einen Vertikal-Teilschnitt durch eine erfindungsgemässe Vorrichtung gemäss einer zweiten Ausführungsform, bei welcher der Körper 3 als Well 19 einer Mikroplatte 20 ausgebildet ist. Die zweite Ausführungsform ist somit im Wesentlichen eine Vervielfachung der ersten Ausführungsform, wobei eine Vervielfachung um die Faktoren 96, 384 oder 1536 - entsprechend der Wellzahl von Mikroplatten - speziell bevorzugt ist. Wahlweise kann ein ringförmiger Bereich 13 der Kapillare 9 und/oder ein direkt an diese Kapillare anschliessender Bereich 13' der Innenoberfläche 14 des Körpers 3 hydrophobisiert sein, um eine Luftblase 25 zu erzeugen, welche beim späteren Absaugen des Eluats kein Hindernis darstellt.

Wie in Figur 5 dargestellt, kann die Vorrichtung - gemäss einer dritten Ausführungsform - zudem ein Trägerelement 17 mit zumindest einer Vertiefung 18 umfassen, in welche die Vorrichtung 1 dichtend einstellbar ist, ohne dass die Kapillare 9 berührt wird. Es hat sich herausgestellt, dass die gefüllten Wells 19 sich während eines Inkubiervorganges nicht entleeren, wenn diese dichtende Verbindung zwischen Trägerelement 17 und den Wells 19 hergestellt ist. Das Verhindern des Berührens der Kapillaren 9 schützt diese vor einer mechanischen Beschädigung.

Für eine Einzelspitze genügt selbstverständlich eine einzelne Vertiefung 18. Besteht die Vorrichtung 1 aus der Kombination einer Mikroplatte 20 mit Kapillaren 9, so ist das Trägerelement 17 bevorzugt als Trägerplatte ausgebildet, welche je eine Vertiefung 18 pro Well 19 der Mikroplatte 20 aufweist. Solche Trägerelemente bzw. Trägerplatten werden bevorzugt aus Polypropylen bzw. Polypropylenschaum (geschlossenporig) und dergleichen festen bzw. elastischen Kunststoffen hergestellt. Sie können auch als Unterlage zum Montieren der Kapillaren 9 gemäss einem ersten erfindungsgemässen Verfahren verwendet werden (vgl. Fig. 6).

Figur 6 zeigt einen Vertikal-Teilschnitt durch eine Einrichtung zum Herstellen der erfindungsgemässen Vorrichtung 1 gemäss einer der gezeigten Ausführungsformen. Das Verfahren ist durch die folgenden Arbeitsschritte gekennzeichnet:
- Unterteilen einer mit einer Packung 10 gefüllten Endlos-Kapillare mit einem bestimmten Durchmesser 11 in Kapillaren 9 mit der gewünschten Länge 12 von wenigen mm bis cm;
- Spritzgiessen eines Körpers 3 (z.B. einer Mikroplatte 20) mit einem Sammelraum 4 und einer Aufnahmeöffnung 21 für ein Kapillaren-Teilstück 9;
- Einstecken der Kapillare 9 durch den Sammelraum 4 hindurch.

Dargestellt in Fig. 6 sind zwei Phasen des Einsteckens mit einer druckbleistiftartigen Vorrichtung: Auf der linken Seite wird eine Einsteckvorrichtung 22 abgesenkt, bis sie eine Endposition (auf der rechten Seite dargestellt) erreicht und die unterste Kapillare 9 fertig eingesetzt und positioniert ist. Diese Einsteckvorrichtung 22 umfasst ein Führungsrohr 23, eine Greifvorrichtung 24 und ein Reservegehäuse 25. Das Führungsrohr 23 führt und zentriert die Kapillaren 9, welche aus dem Reservegehäuse 25 nachgeliefert und mittels der Greifvorrichtung 24 gehalten werden. Vorzugsweise sind die Aussenflächen des Führungsrohrs 23 und/oder der Greifvorrichtung 24 und/oder des Reservegehäuses 25 so dimensioniert bzw. abgeschrägt, dass sie in den Sammelraum 4 eingeführt bzw. dessen Innenoberfläche 14 beaufschlagen können. Speziell bevorzugt ist, dass beim Beaufschlagen der Innenoberfläche 14 des Sammelraums 4 mit zumindest einem der Teile Führungsrohr 23, Greifvorrichtung 24 und/oder Reservegehäuse 25, die unterste Kapillare 9 gerade ihren endgültigen Sitz erreicht. Damit die Kapillare 9 gut in diesem Sitz gehalten ist, wird die Aufnahmeöffnung 21 vorzugsweise mit einem geringen Untermass hergestellt und durch das Einsetzen der Kapillare 9 auf das endgültige Mass aufgeweitet.

Als Unterlage und Träger für die wie eben beschrieben zu bearbeitende Mikroplatte 20, eignet sich z.B. ein Trägerelement 17, wie das im Zusammenhang mit Fig. 5 schon beschrieben wurde. Dabei stellen die Vertiefungen 18, welche mit den Wells 19 der Mikroplatte 20 im Register angeordnet sind eine sichere Auflage dar und schützen die eingesetzten Kapillaren 9 vor mechanischer Beschädigung.

Zum Schutz der eingesetzten Kapillaren kann eine mit Kapillaren 9 bestückte Mikroplatte 20 zusammen mit einem Trägerelement 17 beispielsweise gelagert, verpackt und versandt werden.

Ein alternatives Verfahren (nicht dargestellt) zum Herstellen der erfindungsgemässen Vorrichtung gemäss einer der gezeigten Ausführungsformen ist gekennzeichnet durch die folgenden Arbeitsschritte:
- Festhalten einer mit einer Packung 10 gefüllten Endlos-Kapillare mit einem bestimmten Durchmesser 11;
- Spritzgiessen eines Körpers 3 mit einem Sammelraum 4 um die festgehaltene Endlos-Kapillare herum;
- Abtrennen eines ersten, äusseren Restes der Endlos-Kapillare zur Erzeugen der gewünschten Länge 12 der Kapillare 9;
- Abtrennen eines zweiten, inneren Restes der Kapillare 9.

Das Abtrennen des ersten, äusseren Restes soll sehr vorsichtig und gezielt erfolgen, weil damit das endgültige Volumen der Packung 10 festgelegt wird. Dagegen kann das Abtrennen des zweiten, inneren Restes der Kapillare 9 z.B. durch einfaches Abknicken erfolgen, weil der feste Sitz der Kapillare 9 in der Aufnahmeöffnung 21 des Körpers 3 einen exakten Knickbereich definiert.

Zum Bestücken einer Mikroplatte mit Kapillaren können mehrere Kapillaren 9 parallel eingesteckt bzw. mehrere Endloskapillaren verwendet werden.

In den Figuren sind gleiche Teile mit den gleichen Bezugszeichen versehen, dabei gelten die entsprechenden Bezeichnungen, auch wenn sie nicht in jedem Fall ausdrücklich aufgeführt sind. Beliebige Kombinationen der gezeigten bzw. beschriebenen Merkmale sind Bestandteil der vorliegenden Erfindung.

## Patentansprüche

1. Mikroplatte (20) zum Bearbeiten von Proben (2), umfassend:
• eine Vielzahl von Wells mit je einem Sammelraum (4);
• je einen an den Sammelraum (4) eines Wells anschliessenden Trennraum (6) zur Festphasenextraktion und Elution von aus diesen Proben (2) abgetrennten organischen bzw. anorganischen Teilchen (7); und
• eine Öffnung (8) pro Well zum Abgeben dieser Teilchen (7);
**dadurch gekennzeichnet, dass** jedes Well der Mikroplatte (20) eine mit dem Sammelraum (4) verbundene Kapillare (9) umfasst, welche eine monolithische Packung (10) zur Festphasenextraktion von aus diesen Proben (2) abgetrennten organischen bzw. anorganischen Teilchen (7) aufweist und als Trennraum (6) dient, wobei diese Kapillare (9) in einer gewünschten Länge von einer Endloskapillare abgetrennt wurde, einen bestimmten Durchmesser aufweist, eine Wand umfasst und die Öffnung (8) bereitstellt.

2. Mikroplatte nach Anspruch 1, **dadurch gekennzeichnet dass** jedes Well mit dem Sammelraum (4) mit einer auf diesen Sammelraum wirkenden Pumpe (5) verbunden ist.

3. Mikroplatte nach Anspruch 1 oder 2, **dadurch gekennzeichnet, dass** die Packung (10) jeder Kapillare (9) unmittelbar an den Sammelraum (4) anschliesst.

4. Mikroplatte nach Anspruch 1, 2 oder 3, **dadurch gekennzeichnet, dass** die Packung (10) jede Kapillare (9) ganz ausfüllt.

5. Mikroplatte nach einem der vorhergehenden Ansprüche, **dadurch gekennzeichnet, dass** die Packung (10) in den Kapillaren an die chemisch-physikalische Natur der zu extrahierenden, organischen bzw. anorganischen Teilchen (7) angepasst ist.

6. Mikroplatte nach einem der vorhergehenden Ansprüche, **dadurch gekennzeichnet, dass** die Kapillare (9) einen Durchmesser (11) und eine Länge (12) aufweist, welche an ein bestimmtes Packungs-Volumen angepasst ist.

7. Mikroplatte nach einem der vorhergehenden Ansprüche, **dadurch gekennzeichnet, dass** die Kapillare (9) durch Einstecken in die Wells oder durch Umspritzen mit den Wells jeweils mit dem Sammelraum (4) verbunden ist.

8. Mikroplatte nach einem der vorhergehenden Ansprüche, **dadurch gekennzeichnet, dass** zumindest ein ringförmiger Bereich (13) jeder Kapillare (9) und/oder ein direkt an diese Kapillare anschliessender Bereich (13') der Innenoberfläche (14) jedes Wells hydrophobisiert ist.

9. Mikroplatte nach einem der vorhergehenden Ansprüche, **dadurch gekennzeichnet, dass** jedes Well eine V-Form aufweist, welche im Bereich ihrer engsten Stelle an die Kapillare (9) anschliesst.

10. Mikroplatte nach einem der vorhergehenden Ansprüche, **dadurch gekennzeichnet, dass** zumindest ein Teil der Innenoberfläche (14) jedes wells eine im Wesentlichen koaxial zu der Längsachse (15) der Wells verlaufende Reliefstruktur (16) umfasst.

11. Mikroplatte nach einem der vorhergehenden Ansprüche, **dadurch gekennzeichnet, dass** die Mikroplatte (20) zudem ein Trägerelement (17) mit zumindest einer Vertiefung (18) umfasst, in welche die Mikroplatte (20) dichtend einstellbar ist, ohne dass eine Kapillare (9) berührt wird.

12. Mikroplatte nach Anspruch 11, **dadurch gekennzeichnet, dass** das Trägerelement (17) als Trägerplatte ausgebildet ist, welche je eine Vertiefung (18) pro Well der Mikroplatte (20) aufweist.

13. Mikroplatte nach Anspruch 12, **dadurch** gekenntzeichnet, dass die Trägerplatte aus Polypropylen bzw. Polypropylenschaum und dergleichen festen bzw. elastischen Kunststoffen hergestellt ist.

14. Verwendung der Mikroplatte (20) nach einem der Ansprüche 1 bis 13 zur Festphasenextraktion und Elution von aus Proben (2) abgetrennten organischen bzw. anorganischen Teilchen (7).

15. Verwendung nach Anspruch 14, **dadurch gekennzeichnet, dass** die Proben (2) einem Inkubationsschritt unterworfen werden.

16. Verfahren zur Herstellung einer Mikroplatte (20) nach einem der Ansprüche 1 bis 13, **gekennzeichnet durch** die folgenden Arbeitsschritte:
• Unterteilen einer mit einer Packung (10) gefüllten Endlos-Kapillare mit einem bestimmten Durchmesser (11) in Kapillaren (9) mit der gewünschten Länge (12);
• Spritzgiessen der Wells dieser Mikroplatte mit je einem Sammelraum (4) und je einer Aufnahmeöffnung (21) für ein Kapillaren-Teilstück (9);
• Einstecken der Kapillare (9) **durch** den Sammelraum (4) hindurch.

17. Verfahren zur Herstellung einer Mikroplatte (20) nach einem der Ansprüche 1 bis 13, **gekennzeichnet durch** die folgenden Arbeitsschritte:
• Festhalten von mit einer Packung (10) gefüllten Endlos-Kapillaren mit einem bestimmten Durchmesser (11);
• Spritzgiessen der Wells dieser Mikroplatte mit je einem Sammelraum (4) um die festgehaltenen Endlos-Kapillaren herum;
• Abtrennen eines ersten, äusseren Restes der Endlos-Kapillaren zum Erzeugen der gewünschten Länge (12) der Kapillaren (9);
• Abtrennen eines zweiten, inneren Restes der Kapillaren (9).

## Claims

1. A microplate (20) for processing samples (2) comprising:
- a plurality of wells each having a collection chamber (4);
- separation chambers (6), each adjoining collection chamber (4) of a well, for solid phase extraction and elution of organic or inorganic particles (7) separated from these samples (2); and
- one opening (8) per well for discharging these samples (7);
**characterized in that** each well of the microplate (20) comprises a capillary (9) connected to the collection chamber (4), which has a monolithic packing (10) for solid phase extraction of organic or inorganic particles (7) separated from the samples (2) and which is used as the separation chamber (6), this capillary (9) having been cut off at a desired length from an endless capillary, having an established diameter comprising a wall, and providing the opening (8),

2. The microplate according to Claim 1, **characterized in that** the collection chamber (4) of each well is connected to a pump (5) acting on this collection chamber.

3. The microplate according to Claim 1 or 2, **characterized in that** the packing (10) of each capillary (9) directly adjoins the collection chamber (4).

4. The microplate according to Claim 1, 2, or 3, **characterized in that** the packing (10) entirely fills each capillary (9).

5. The microplate according to one of the preceding claims, **characterized in that** the packing (10) in the capillary is adapted to the chemical-physical nature of the organic or inorganic particles (7) to be extracted.

6. The microplate according to one of the preceding claims, **characterized in that** the capillary (9) has a diameter (11) and a length (12) which are adapted to an established packing volume.

7. The microplate according to one of the preceding claims, **characterized in that** the capillary (9) is connected in each case to the collection chamber (4) by insertion into the well or by extrusion coating with the well.

8. The microplate according to one of the preceding claims, **characterized in that** at least one annular area (13) of each capillary (9) and/or an area (13') of the inner surface (14) of each well, which directly adjoins this capillary, is hydrophobized.

9. The microplate according to one of the preceding claims, **characterized in that** each well has a V-shape, which adjoins the capillary (9) in the area of its narrowest point.

10. The microplate according to one of the preceding claims, **characterized in that** at least a part of the inner surface (14) of each well comprises a relief structure (16) running essentially coaxially to the longitudinal axis (15) of the well.

11. The microplate according to one of the preceding claims, **characterized in that** the microplate (20) additionally comprises a support element (17) having at least one depression (18), into which the microplate (20) can be sealingly placed, without a capillary (9) being touched.

12. The microplate according to Claim 11, **characterized in that** the support element (17) is implemented as a support plate, which has respectively one depression (18) per well of the microplate (20),

13. The microplate according to Claim 12, **characterised in that** the support plate is produced from polypropylene or polypropylene foam or similar solid or elastic plastics.

14. A use of the microplate (20) according to one of Claims 1 through 13 for solid phase extraction and elution of organic or inorganic particles (7) separated from samples (2),

15. The use according to Claim 14, **characterized in that** the samples (2) are subjected to an incubation step.

16. A method for producing a microplate (20) according to one of Claims 1 through 13, **characterized by** the following work steps:
- dividing an endless capillary, which is filled with packing (10) and which has an established diameter (11), into capillaries (9) having the desired length (12);
- injection molding the wells of this microplate, each having one collection chamber (4) and one receptacle opening (21) for a capillary part (9);
- inserting the capillary (9) through the collection chamber (4).

17. A method for producing a microplate (20) according to one of Claims 1 through 13, **characterized by** the following work steps,
- fixing endless capillaries, which are filled with packing (10), having an established diameter (11);
- injection molding the wells of this microplate each having a collection chamber (4) around the fixed endless capillaries;
- cutting off a first outer remainder of the endless capilliaries to create the desired length (12) of the capillaries (9);
- cutting off a second inner remainder of the capillaries (9).

## Revendications

1. Plaque de microtitration (20) destinée à traiter des échantillons (2), comprenant:
- une multitude de puits ayant respectivement un espace de collecté (4);
- un espace de séparation (6) respectif raccordé à l'espace de collecte (4) d'un puits, destiné à une extraction en phase solide et à une élution de particules (7) organiques ou inorganiques séparées de cet échantillon (2) ; et
- une ouverture (8) par puits pour soutirer ces particules (7);
**caractérisée en ce que** chaque puits de la plaque de microtitration (20) comprend un tube capillaire (9) relié à l'espace de collecte (4), qui présente une garniture monolithique (10) destinée à l'extraction en phase solide de particules (7) organiques ou inorganiques séparées de ces échantillons (2) et sert d'espace de séparation (6), ce tube capillaire (9) ayant été séparé à une longueur souhaitée d'un tube capillaire sans fin, présentant un diamètre déterminé, comportant une paroi et fournissant l'ouverture (8),

2. Plaque de microtitration selon la revendication 1, **caractérisée en ce que** chaque puits est relié par l'espace de collecte (4) à une pompe (5) agissant sur cet espace de collecte,

3. Plaque de microtitration selon la revendication 1 ou 2, **caractérisée en ce que** la garniture (10) de chaque tube capillaire (9) est raccordée directement à l'espace de collecte (4),

4. Plaque de microtitration selon la revendication 1, 2 ou 3, **caractérisée en ce que** la garniture (10) remplit entièrement chaque tube capillaire (9),

5. Plaque de microtitration selon l'une des revendications précédentes, **caractérisée en ce que** la garniture (10) dans les tubes capillaires est adaptée à la nature physico-chimique des particules (7) organiques ou inorganiques à extraire.

6. Plaque de microtitration selon l'une des revendications précédentes, **caractérisée en ce que** le tube capillaire (9) présente un diamètre (11) et une longueur (12) qui sont adaptés à un volume de garniture déterminé.

7. Plaque de microtitration selon l'une des revendications précédentes, **caractérisée en ce que** le tube capillaire (9) est respectivement relié à l'espace de collecte (4) par enfichage dans les puits ou par surmoulage avec les puits.

8. Plaque de microtitration selon l'une des revendications précédentes, **caractérisée en ce qu'**au moins une zone annulaire (13) de chaque tube capillaire (9) et/ou une zone (13'), directement raccordée à ce tube capillaire, de la surface interne (14) de chaque puits est rendue hydrophobe,

9. Plaque de microtitration selon l'une des revendications précédentes, **caractérisée en ce que** chaque puits présente une forme de V qui se raccorde au tube capillaire (9) dans la zone de son emplacement le plus étroit.

10. Plaque de microtitration selon l'une des revendications précédentes, **caractérisée en ce qu'**au moins une partie de !a surface interne (14) de chaque puits comprend une structure en relief (16) qui s'étend de façon essentiellement coaxiale par rapport à l'axe longitudinal (15) du puits.

11. Plaque de microtitration selon l'une des revendications précédentes, **caractérisée en ce que** la plaque de microtitration (20) comporte de plus un élément de support (17) présentant au moins une cavité (18) dans laquelle la plaque de microtitration (20) peut être placée de façon hermétique sans toucher un tube capillaire (9).

12. Plaque de microtitration selon la revendication 11, **caractérisée en ce que** l'élément de support (17) est conçu comme une plaque de support qui présente respectivement une cavité (18) par puits de la plaque de microtitration (20).

13. Plaque de microtitration selon la revendication 12, **caractérisée en ce que** la plaque de support est fabriquée à partir de polypropylène ou de mousse de polypropylène ou des plastiques soldes ou élastiques équivalents.

14. Utilisation de la plaque de microtitration (20) selon l'une des revendications 1 à 13 pour une extraction en phase solide et une élution de particules (7) organiques ou inorganiques séparées d'échantillons (2),

15. Utilisation selon la revendication 14, **caractérisée en ce que** les échantillons (2) sont soumis à une étape d'incubation.

16. Procédé de fabrication d'une plaque de microtitration (20) selon l'une des revendications 1 à 13, **caractérisé par** les étapes de travail suivantes :
- sectionnement d'un tube capillaire sans fin rempli d'une garniture (10) et présentant un diamètre déterminé (11) en capillaires (9) présentant la longueur souhaitée (12) ;
- moulage par injection des puits de cette plaque de microutration avec respectivement un espace de collecte (4) et respectivement; une ouverture de réception (21) pour un élément de tube capillaire (9);
- enfichage du tube capillaire (9) par l'espace de collecte (4).

17. Procédé de fabrication d'une plaque de microtitration (20) selon l'une des revendications 1 à 13, **caractérisé par** les étapes de travail suivantes :
- maintien de tubes capillaires sans fin remplis d'une garniture (10) et présentant un diamètre déterminé (11) ;
- moulage par injection des puits de cette plaque de microtitration avec respectivement un espace de collecte (4) autour des tubes capillaires sans fin maintenus;
- séparation d'un premier reste externe des tubes capillaires sans fin pour générer !a longueur souhaitée (12) des tubes capillaires (9);
- séparation d'un second reste interne des capillaires (9).
